# EUROPÄISCHE PATENTANMELDUNG

(11) **EP 2 065 182 A1**
(43) Veröffentlichungstag der Anmeldung: **03.06.2009**
(21) Anmeldenummer: 08020413.4
(22) Anmeldetag: 25.11.2008
(51) Int. Cl.: B32B 17/10

(54) **Verfahren zur Herstellung von Verbundsicherheitsglas und nach diesem Verfahren hergestelltes Verbundsicherheitsglas**

(30) Priorität: 27.11.2007 DE 102007057577
(71) Anmelder: Lingott, Mathias, 09116 Chemnitz (DE)
(72) Erfinder: Lingott, Mathias, 09116 Chemnitz (DE)
(74) Vertreter: Findeisen Hübner Neumann

(57) **Zusammenfassung**

Die Erfindung betrifft ein Verfahren zur Herstellung von Verbundsicherheitsglas, bestehend aus mindestens zwei separaten Glasscheiben, die mittels einer Zwischenschicht fest miteinander verbunden werden. Es wird die Aufgabe gelöst, ein solches Verfahren zu schaffen, wobei für die Zwischenschicht ökologisch unbedenkliche Grundstoffe verwendet werden sollen, die auch für ein späteres Recycling gut zu handhaben sind. Diese Aufgabe wird gelöst, indem für die Zwischenschicht in einem überwiegenden Anteil Saccharose (C₁₂H₂₂O₁₁) und Derivate aus Kollagen- und/oder Pektin-Verbindungen und in einem geringfügigen Anteil weitere Zusätze verwendet werden. Weiterhin betrifft die Erfindung ein nach diesem Verfahren hergestelltes Verbundsicherheitsglas.

## Beschreibung

Die Erfindung betrifft ein Verfahren zur Herstellung von Verbundsicherheitsglas, bestehend aus mindestens zwei separaten Glasscheiben, die mittels einer Zwischenschicht fest miteinander verbunden werden sowie ein nach diesem Verfahren hergestelltes Verbundsicherheitsglas.

Für zahlreiche technische Anwendungen werden Schichtwerkstoffe verwendet, bei denen flächige Werkstoffe (Holz, Metall, Textilien, Kunststoffe, Glas) durch Einbringung einer Zwischenschicht fest miteinander verbunden werden. Somit können Erzeugnisse in Form eines Flächenproduktes mit einer hohen Festigkeit geschaffen werden, die beispielsweise als Holzleimbinder für Tragwerke oder als Glasfaser / Karbon- Laminate für hochfeste Bauteile in Kraftfahrzeugen, Flugzeugen und Booten bekannt sind.

Ein weiteres typisches Flächenprodukt dieser Gattung sind Verbundsicherheitsgläser, die als Frontscheiben für Fahrzeuge, Brüstungen für Brücken, Grundkörper für Glastreppen, Türen oder Wände und weitere sicherheitsrelevante Bauteile verwendet werden.

Die bisher bekannten Verfahren zur Herstellung von Verbundsicherheitsglas basieren auf zwei grundsätzlichen Varianten:

Die erste Variante umfasst den Einsatz von Folien oder dünnen Platten aus Kunststoff als Zwischenschicht, die unter Einwirkung von Druck und Temperatur ein glasklares Laminat ergeben (z.B. Frontscheiben für Fahrzeuge). Diesbezügliche technische Lösungen werden beispielsweise in DE 22 58 131 A1 und in DE 43 08 885 A1 beschrieben.

Als zweite Variante ist die Nutzung von chemischen Klebstoffen (z.B. UV-Kleber, Harze, Polymere) bekannt, die vollflächig eingebracht werden. Solche technischen Lösungen werden in DE 26 22 065 A1 (Polyvinylbutyrale), in DE 31 35 672 A1 (Polyurethane) und in DE 42 31 199 A1 (Ethylenterpolymere) beschrieben.

Somit sind für die Herstellung von Verbundsicherheitsglas verschiedene technische Lösungen verfügbar, mit denen trotz eventueller Bedenken bezüglich der chemischen Komponenten eine ökologisch akzeptable Fertigung gewährleistet werden kann. Hingegen ist das Recycling derartiger Erzeugnisse problematisch.

Bei Verbundsicherheitsglas mit einer Zwischenschicht aus Kunststofffolie wird diese Folie beim Recycling weitgehend vom Glasbruch getrennt. Allerdings können am Glas haftende Folienreste die Wiederaufbereitung des Glases beeinträchtigen.

Bei Verbundsicherheitsglas mit polymeren Zwischenschichten ist das Recycling noch schwieriger. Eine direkte Wiederverwendung dieser Komponenten, z.B. durch Extrudieren, ist aufgrund der anhaftenden kleinen Glasteilchen nicht möglich. Ebenso ist eine alternativ mögliche Ablagerung auf einer Deponie oder eine Verbrennung dieser Bestandteile aus ökologischen Aspekten fragwürdig.

Aufgabe der Erfindung ist es, ein Verfahren zur Herstellung von klarem Verbundsicherheitsglas zu schaffen, wobei für die Zwischenschicht ökologisch unbedenkliche Grundstoffe verwendet werden sollen, die auch für ein späteres Recycling gut zu handhaben sind. Weiterhin soll ein entsprechend aufgebautes Verbundsicherheitsglas geschaffen werden.

Die Aufgabe wird mit einem Verfahren mit den technischen Merkmalen gemäß Anspruch 1 und mit einem Erzeugnis mit den technischen Merkmalen gemäß Anspruch 6 gelöst. Vorteilhafte Ausgestaltungen sind jeweils Gegenstand von abhängigen Ansprüchen, deren Merkmale im Ausführungsbeispiel näher erläutert werden.

Das erfindungsgemäße Verfahren schlägt vor, dass für die Zwischenschicht in einem überwiegenden Anteil Saccharose und derivatisierte Hydroxylgruppen der Saccharose zum Einsatz kommen. Die Verwendung von synthetisiertem Saccharoseoctaacetat in Verbindung mit weiteren Zusatzstoffen erlaubt den Aufbau glasklarer Zwischenschichten bei gleichzeitiger dauerhafter Verbindung.

Hierbei werden für die Zwischenschicht pulverförmige Grundstoffe mit Korngrößen in einem Bereich von 0,02 mm bis 2,00 mm sowie als weitere Zusätze biologische, mineralische, polymere oder metallische Zuschlagstoffe verwendet.

Bei Durchführung des Verfahrens wird die Zwischenschicht bei Temperaturen von maximal 200° Celsius verflüssigt. Der konkrete Temperaturverlauf, d.h., die Geschwindigkeit und

Temperaturspanne der Erwärmungs- und Abkühlungsprozesse, bestimmt die optischen Eigenschaften der Zwischenschicht.

Die Zwischenschicht sowie die zugeordneten Glasscheiben werden bei einem Druck in einem Bereich von 1,00 bar bis 15,00 bar miteinander verbunden. Dabei kommen mechanische Verfahren (Presswalzen) oder Druckverfahren (Autoklav) zum Einsatz.

Ein derart hergestelltes Verbundsicherheitsglas umfasst mindestens zwei separate Glasscheiben und eine zwischen diesen angeordnete Zwischenschicht, die einen überwiegenden Anteil Saccharose und derivatisierte Hydroxylgruppen der Saccharose sowie weitere Zuschlagstoffe enthalten.

Hierbei besitzt die Zwischenschicht des zunächst pulverförmigen Grundstoffes Korngrößen in einem Bereich von 0,02 mm bis 2,00 mm sowie als weitere Zusätze biologische, mineralische, polymere oder metallische Zuschlagstoffe.

Mit der erfindungsgemäßen technischen Lösung kann ein klares Verbundsicherheitsglas hergestellt werden, dessen Zwischenschicht aus ökologisch unbedenklichen Grundstoffen besteht, die auch für ein späteres Recycling gut zu handhaben sind. Hierbei können in Abhängigkeit der jeweils konkreten Verfahrensbedingungen verschieden klare Verbundgläser mit minimalen Schichtdicken und mit hoher Festigkeit hergestellt werden.

Als weitere Vorteile werden die Materialkosten gegenüber den bisherigen Verfahren stark reduziert, weil die kostenintensiven Folien oder Klebstoffe entfallen. Weiterhin werden die Herstellungskosten durch geringeren Energiebedarf und kürzere Fertigungszeiten reduziert. Schließlich können Anforderungen hinsichtlich Sicherheit (Statik, Bauphysik) und optischer Gestaltung individuell erfüllt werden.

Nachfolgend wird ein Ausführungsbeispiel der Erfindung beschrieben:

Das vorgeschlagene Verfahren ist zur Herstellung von Verbundsicherheitsglas geeignet, das aus mindestens zwei separaten Glasscheiben besteht, die mittels einer Zwischenschicht fest miteinander verbunden werden. Für diese Zwischenschicht werden in einem überwiegenden Anteil Saccharose (C₁₂H₂₂O₁₁) und Derivate aus Kollagen- und/oder Pektin-Verbindungen und in einem geringfügigen Anteil weitere Zusätze verwendet. Dabei werden für die Zwischenschicht pulverförmige Grundstoffe mit Korngrößen in einem Bereich von 0,02 mm bis 2,00 mm und als weitere Zusätze biologische, mineralische, polymere oder metallische Zuschlagstoffe verwendet. Die derart zusammengesetzte Zwischenschicht wird bei Temperaturen von maximal 200° Celsius vollständig verflüssigt, wobei die Zwischenschicht und die zugeordneten Glasscheiben bei einem Druck in einem Bereich von 1,00 bar bis 15,00 bar miteinander verbunden werden.

Mit den benannten Verfahrensschritten wird ein klares Verbundsicherheitsglas hergestellt, das mindestens zwei separate Glasscheiben und eine zwischen diesen angeordnete Zwischenschicht aufweist, die einen überwiegenden Anteil Saccharose (C₁₂H₂₂O₁₁) und Derivate aus Kollagen- und/oder Pektin-Verbindungen und einen geringfügigen Anteil weiterer Zusätze aufweist. Hierbei weist die Zwischenschicht pulverförmige Grundstoffe mit Korngrößen in einem Bereich von 0,02 mm bis 2,00 mm sowie als weitere Zusätze biologische, mineralische, polymere oder metallische Zuschlagstoffe auf.

## Patentansprüche

1. Verfahren zur Herstellung von Verbundsicherheitsglas, bestehend aus mindestens zwei separaten Glasscheiben, die mittels einer Zwischenschicht fest miteinander verbunden werden, **dadurch gekennzeichnet,**
**dass** für die Zwischenschicht in einem überwiegenden Anteil Saccharose (C₁₂H₂₂O₁₁) und Derivate aus Kollagen- und/oder Pektin-Verbindungen und in einem geringfügigen Anteil weitere Zusätze verwendet werden.

2. Verfahren nach Anspruch 1, **dadurch gekennzeichnet,**
**dass** für die Zwischenschicht pulverförmige Grundstoffe mit Korngrößen in einem Bereich von 0,02 mm bis 2,00 mm verwendet werden.

3. Verfahren nach Anspruch 1, **dadurch gekennzeichnet,**
**dass** für die Zwischenschicht als weitere Zusätze biologische, mineralische, polymere oder metallische Zuschlagstoffe verwendet werden.

4. Verfahren nach Anspruch 1, **dadurch gekennzeichnet,**
**dass** die Zwischenschicht bei Temperaturen von maximal 200° Celsius vollständig verflüssigt wird.

5. Verfahren nach Anspruch 1, **dadurch gekennzeichnet,**
**dass** die Zwischenschicht und die zugeordneten Glasscheiben bei einem Druck in einem Bereich von 1,00 bar bis 15,00 bar miteinander verbunden werden.

6. Verbundsicherheitsglas, hergestellt nach dem Verfahren gemäß der Ansprüche 1 bis 5,
**dadurch gekennzeichnet,**
**dass** das Verbundsicherheitsglas mindestens zwei separate Glasscheiben und eine zwischen diesen angeordnete Zwischenschicht aufweist, die einen überwiegenden Anteil Saccharose (C₁₂H₂₂O₁₁) und Derivate aus Kollagen- und/oder Pektin-Verbindungen und einen geringfügigen Anteil weiterer Zusätze aufweist.

7. Verbundsicherheitsglas nach Anspruch 6, **dadurch gekennzeichnet,**
**dass** die Zwischenschicht pulverförmige Grundstoffe mit Korngrößen in einem Bereich von 0,02 mm bis 2,00 mm aufweist.

8. Verbundsicherheitsglas nach Anspruch 6, **dadurch gekennzeichnet,**
**dass** die Zwischenschicht als weitere Zusätze biologische, mineralische, polymere oder metallische Zuschlagstoffe aufweist.
